# EUROPEAN PATENT SPECIFICATION

(11) **EP 3 490 415 B1**
(45) Date of publication and mention of the grant of the patent: **28.06.2023**
(21) Application number: 17755252.8
(22) Date of filing: 25.07.2017
(51) Int. Cl.: A47J 27/00, H05B 6/12

(54) **POT USABLE ON INDUCTION PLATES**
TOPF ZUR VERWENDUNG AUF INDUKTIONSKOCHFELDERN
POT UTILISABLE SUR DES PLAQUES D'INDUCTION

(30) Priority: 27.07.2016 IT 201600079091
(43) Date of publication of application: 05.06.2019
(73) Proprietor: Università degli Studi di Padova, 35122 Padova (IT)
(72) Inventor: DUGHIERO, Fabrizio, 35122 Padova (IT)
(74) Representative: Ponchiroli, Simone
(86) International application number: PCT/IB2017/054504
(87) International publication number: WO 2018/020416

(56) References cited:
- WO-A1-2014/075923
- WO-A1-2016/042123
- JP-A- H09 289 946
- JP-B2- 3 198 628
- JP-B2- 3 258 247

## Description

This invention relates to a pot, in particular a pot usable on electromagnetic induction plates for cooking (which may or may not be inserted in induction hobs).

On the market there are currently many pots usable on induction hobs, that is to say, pots whose base contains at least one active portion made of ferromagnetic material and therefore, if struck by the electromagnetic field generated by the induction hob, able to heat up thanks to the Joule effect due to electric currents induced in it by that electromagnetic field.

In recent years, induction cooking has become increasingly popular, thanks both to the greater energy efficiency of that heating system compared with a traditional gas cooker, and the fact that an induction hob itself is able to not heat up, even if supplied with maximum power, therefore reducing the risks for the user.

Despite that, current induction cooking systems have several limitations and disadvantages.

First, although the hobs themselves are able to remain substantially cold during use, the same cannot be said for the pots which heat up as much as traditional pots and therefore are still a danger for users (even more so if one considers that, during cooking, the fact that the pot is in use is not immediately obvious, unlike in the case of a gas cooker, where the user always sees whether or not the flame is present). Since the pots are resting on the hob, they also transmit part of their heat to the hob, which may therefore indirectly reach temperatures that are dangerous to the user.

There are also prior art induction pots with electronic timers, as well as in general electric mixing devices which can be applied to pots of any type for continuously mixing their contents.

Both the timers and the mixing devices are usually removable, to allow normal washing of the pot without risks to the electrical parts (whilst the timers are normally battery-powered, the mixing devices have an electric power lead for connecting the electricity network).

Therefore, even these prior art solutions are not without disadvantages, mainly due to the inconvenience of managing the electric power supply (in the case of the timers the batteries have to be changed regularly and it is unknown whether or not they will go flat during a particularly tricky cooking session, whilst for mixing devices attention always has to be paid to ensure that the power lead does not come into contact with parts that are too hot, which could damage it, also putting user safety at risk).

Moreover, document JP H09 289946 A discloses a rice cooking apparatus which comprises a bottom body and an inner pot container that can be attached/detached to the bottom body. In the inner pot container, an inner pot is housed. The apparatus incorporates both an induction heating coil in the bottom body as a primary coil for induction heating and a secondary side coil in the inner pot container. When the induction heating coil is energized, induction heating is performed to the bottom of the inner pot. Besides, a current is generated in the secondary side coil. The secondary side coil then performs the induction heating of the lower face of the inner pot and heats the upper side face of the inner pot by energizing a heater.

In this context, the technical purpose which forms the basis of this invention is to provide a pot usable on induction plates which overcomes the above-mentioned disadvantages.

It is also the technical purpose of this invention to provide a type of pot usable on induction plates that allows easier use of accessories such as timers and mixing devices.

In particular, it is the technical purpose of this invention to provide a pot usable on induction plates that is less dangerous to the user than prior art induction pots.

The technical purpose specified and the aims indicated are substantially achieved by a pot usable on induction plates as described in the appended claims.

Further features and the advantages of this invention are more apparent in the detailed description, with reference to the accompanying drawings which illustrate several preferred, non-limiting embodiments of a pot usable on induction plates, in which:
- Figure 1 is a schematic vertical section of the structure of a pot usable on induction plates;
- Figure 2 is a schematic vertical section of a first embodiment of a pot usable on induction plates;
- Figure 3 is a schematic vertical section of a second embodiment of a pot usable on induction plates;
- Figure 4 is a schematic vertical section of a third embodiment of a pot usable on induction plates;
- Figure 5 is a schematic vertical section of a fourth embodiment of a pot usable on induction plates;
- Figure 6 is a schematic vertical section of a fifth embodiment of a pot usable on induction plates;
- Figure 7 is a schematic vertical section of a sixth embodiment of a pot usable on induction plates;
- Figure 8 is a schematic vertical section of a seventh embodiment of a pot usable on induction plates;
- Figure 9 is a schematic vertical section of the lower part of an eighth embodiment of a pot usable on induction plates which is made according to this invention;
- Figure 10 is a top view of a detail of the pot of Figure 9;
- Figure 11 is a top view of the detail of Figure 10 in a different configuration; and
- Figures 12 and 13 are top views of two movable elements that constitute the detail of Figure 11, in their respective positions in Figure 11.

With reference to the accompanying drawings, the numeral 1 denotes in its entirety a pot usable on induction plates.

The pot 1 usable on induction plates according to this invention has two main features: on one hand it has an external part that is at least part made of thermally insulating material, and on the other hand it is equipped with an electrically-powered auxiliary device, that can be powered directly by the induction plate on which the pot 1 is positioned. Preferably, the pot 1 that is the subject matter of this invention is usable for heating or cooking only on induction plates.

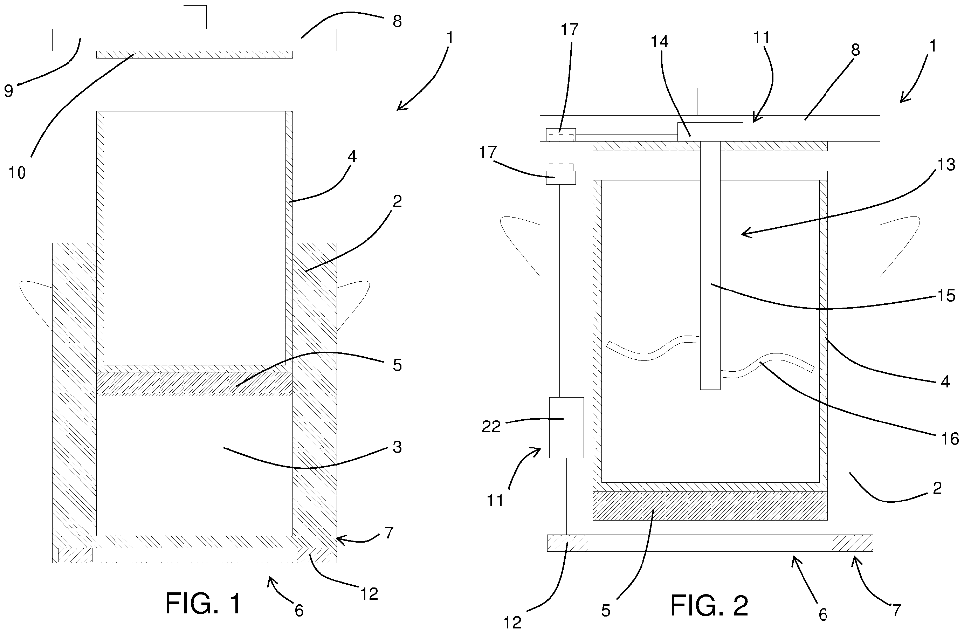

More precisely, as regards the structural aspects illustrated in Figure 1, in its most general embodiment the pot 1 comprises first an outer containment body 2 at least partly made of a material that is both thermally insulating and non-magnetic or diamagnetic. The outer containment body 2 forms at least one main housing seat 3. Mounted in the seat is a container 4 at least partly made of a thermally conductive material and having at least one active portion 5 made of ferromagnetic material that can therefore be heated by electromagnetic induction.

In particular, advantageously the outer containment body 2 comprises the material that is thermally insulating and non-magnetic or diamagnetic, at least at a base 6 of the pot 1 intended in use to rest on an induction plate, but in the preferred embodiments at least the outer surface 7 is entirely constituted of that material.

In particular, in the preferred embodiments the thermally insulating and non-magnetic or diamagnetic material is wood, painted wood, surface-treated wood or wood coated with nanoparticles (for example, with a silicon matrix). Advantageously, the aim of the painting, surface treatment or coating with nanoparticles is to increase some physical properties of the wood such as resistance to water and heat (so as to also make it dishwasher-safe or allow its use for high temperature cooking) or the auto-ignition temperature.

Depending on the embodiments, the container 4 may be inserted in the main housing seat 3 removably or not.

In the preferred embodiments, the outer containment body 2 also advantageously comprises at least one lid 8 couplable to the main housing seat 3 for closing the container 4. For that purpose, the lid 8 may comprise an outer part 9 made of a first material that can be rested on top of the rest of the outer containment body 2, and an inner part 10 made of a second material and insertable in the main housing seat 3 until it substantially makes contact with the container 4; preferably that inner part 10 is shaped like a normal lid of a pot 1 (if necessary, shaped to ensure that any condensation falls inside the container 4, etc.). Moreover, the lid 8 may also be made in such a way that it can close the container 4 (or more generally the main housing seat 3) in a way sealed against pressure, so that the pot 1 may be a pressure cooker.

Whilst the first material is advantageously the same as that used for the rest of the outer containment body 2, the second material may also be the same as that of the container 4.

As already indicated, according to this invention the pot 1 also comprises at least one electrically-powered auxiliary device 11. Moreover, to guarantee the power supply to that auxiliary device 11, the pot 1 comprises at least one power supply inductor 12 joined to the outer containment body 2, which can be powered by electromagnetic induction and is electrically connected to the auxiliary device 11 for powering it. In particular, the power supply inductor 12 is positioned in such a way that when the pot 1 is on an induction plate, the electromagnetic field generated by the latter is concatenated by the power supply inductor 12 and causes a difference in potential in the power supply inductor 12.

In the schematic embodiments illustrated in the accompanying figures, the inductor is positioned at the base 6 of the outer containment body 2 and is shown as an annular coil extending across almost the entire width of the base 6. However, in other embodiments the power supply inductor 12 may be constituted of one or more coils (or loops) located in limited portions of the base 6 of the outer containment body 2 (even vertically offset relative to the ferromagnetic active portion 5).

Depending on requirements, since the power supply voltage and frequency that the power supply inductor 12 can supply to the auxiliary device 11 depend on the electromagnetic field to which it is in use subjected (that generated by the induction plate), between the power supply inductor 12 and the auxiliary device 11, or directly in the auxiliary device 11, there may be a voltage adapter and/or a frequency adapter which are suitable for supplying the auxiliary device 11 with appropriate voltage and frequency values.

Depending on requirements, the auxiliary device 11 and/or the power supply inductor 12 may be mounted on or in the outer containment body 2 in a watertight way (so that they can be washed, even in a dishwasher, together with that body) or removably.

Advantageously, the auxiliary device 11 and the power supply inductor 12 are mounted on or in the outer containment body 2 in such a way that the latter keeps them thermally isolated from the inner container 4.

Moreover, the auxiliary device 11 may be at least partly mounted on the lid 8 if the lid is present.

As illustrated in the accompanying figures, the auxiliary device 11 may have various forms. Only some are described below, although there could be others. It should also be noticed that all of the embodiments described below, if necessary and if it is technically sensible, may also be combined with each other to produce more complex auxiliary devices and pots.

According to a first embodiment, the auxiliary device 11 comprises a mechanical manipulation device coupled to the container 4 and designed, in use, to apply a mechanical action to the contents of the container 4, such as a mincing or a mixing action. For example, in the case of Figure 2, the auxiliary device 11 comprises a mixer 13 that in turn comprises an electric motor 14 mounted in the lid 8 that drives the rotation of a vertical shaft 15, from which several mixing blades 16 extend outwards. Although in this case the electric motor 14 is joined to the lid 8, in other embodiments it may be joined to other parts of the outer containment body 2.

It should also be noticed that in the case of Figure 2, in which the lid 8 is separate from the rest of the outer containment body 2 and can therefore be removed, the electric power supply of the auxiliary device 11 mounted on the lid 8 is guaranteed using suitable electric contacts 17, advantageously shaped like a plug and socket. However, in order to guarantee user safety, the electric contacts 17 will advantageously be couplable in a watertight way and they will only be supplied with electricity when the lid 8 is correctly positioned on the rest of the outer containment body 2 (there may be a suitable sensor present for this purpose). Obviously, what is described in this paragraph applies to any other embodiment in which the auxiliary device 11 is at least partly mounted on a lid 8 that is separable from the rest of the outer containment body 2.

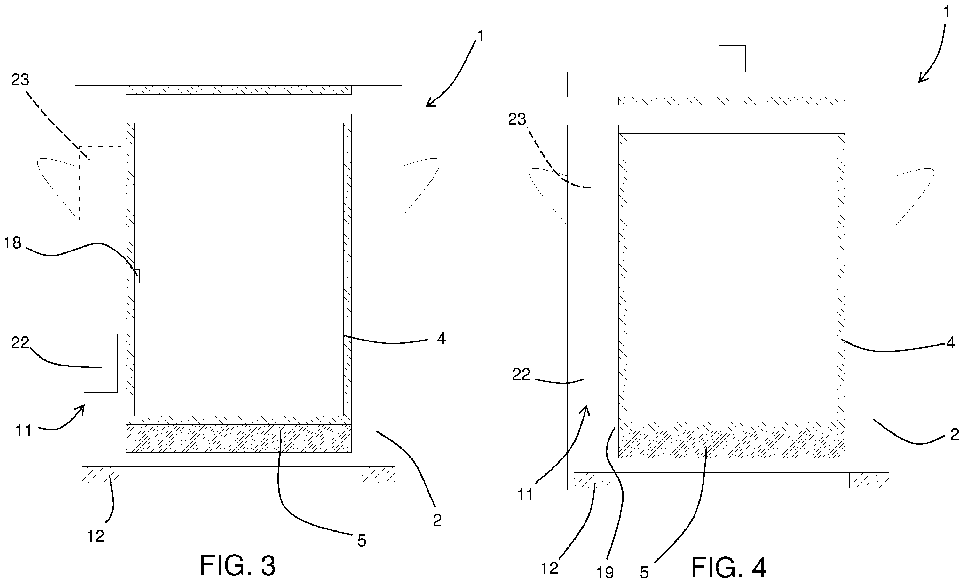

According to another embodiment, the auxiliary device 11 comprises a measuring device. For example, the measuring device may be coupled to the container 4 and designed, in use, to measure the pressure inside the container 4 (like in Figure 3 where it comprises a pressure sensor 18 positioned on the inside 10 of the container 4) or the temperature of the container 4 (like in Figure 4 where it comprises a temperature sensor 19 positioned in contact with the outer wall of the container 4 near the active portion 5) or of its contents (solution not illustrated).

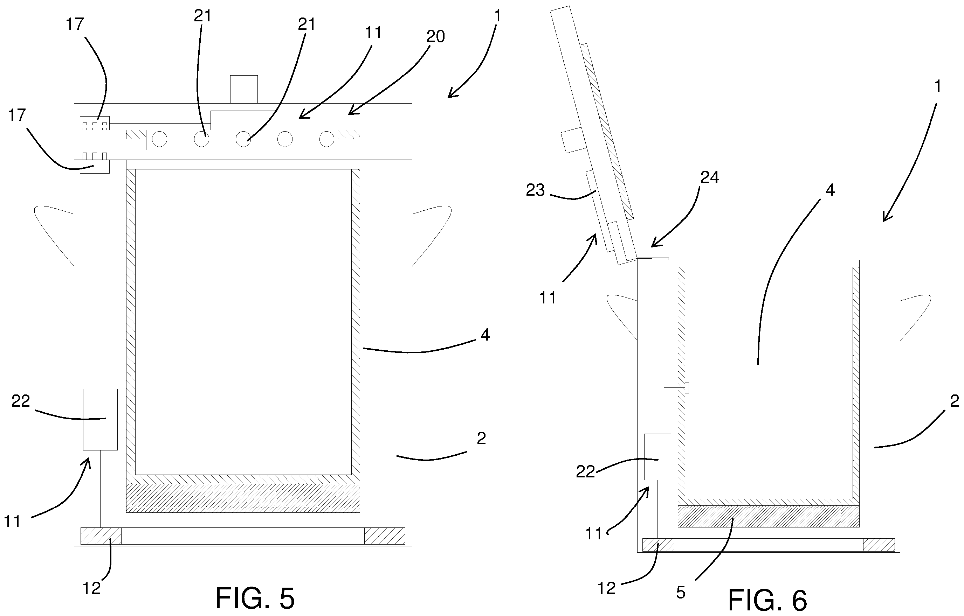

In further embodiments, the auxiliary device 11 comprises an additional heating device 20 coupled to the container 4 and designed, in use, to heat the contents of the container 4 in a way different to induction heating, advantageously by radiating heat directly inside the container 4. Figure 5 shows the case in which the additional heating device 20 comprises a plurality of heating elements 21 (for example, electric resistor heating elements or infra-red lamps) mounted on the lid 8 for heating the food from above.

In many embodiments advantageously the auxiliary device 11 also comprises a programmed and/or programmable control unit 22, which allows operation of the device to be controlled either based on information saved in it in advance, or based on specifications supplied by the user.

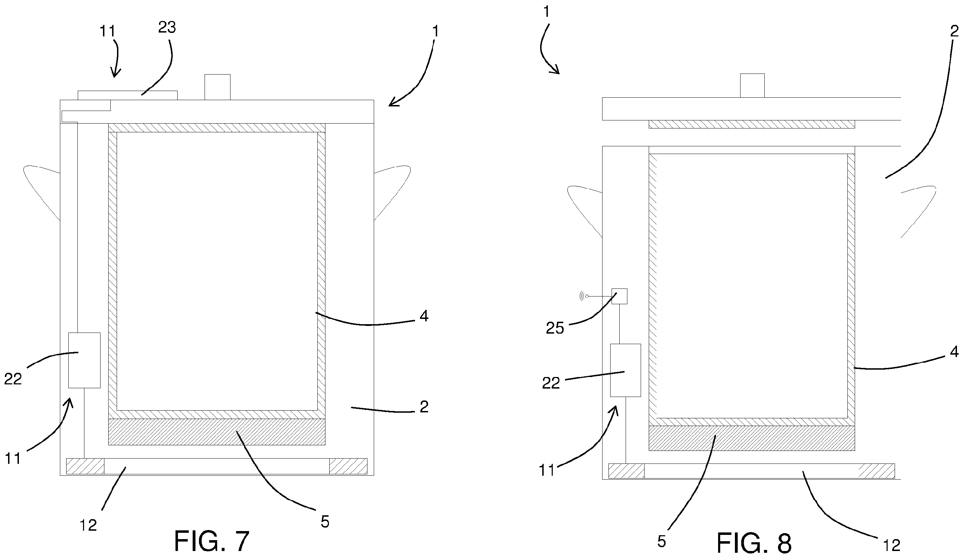

In fact, in many embodiments it is also advantageously the case that the auxiliary device 11 also comprises at least one interface 23 positioned at a lateral or upper outer surface 7 of the containment body. That interface 23 may perform various functions. For example, it may act only as a display for communicating to the user any values measured inside the pot 1 (for example, the pressure in the case illustrated in Figure 6), or allow interaction with the control unit 22 so that the user can control operation of the mechanical manipulation device or of the additional heating device 20 or of another device, or it may act as a simple timer as in the case in Figure 7, etc. It should be noticed that Figures 6 and 7 illustrate the case of a pot 1 in which the outer containment body 2 comprises a lid 8 hinged to the rest of the outer containment body 2, and movable between a closed position in which it closes the container 4 (Figure 7) and an open position (Figure 6). In this case, if the auxiliary device 11 is at least partly mounted on the lid 8, the related power supply leads can advantageously pass at the hinge 24.

Furthermore, the auxiliary device 11 may also comprise a radio communication board 25 (as shown in Figure 8 - for example wi-fi) for allowing communication either with external electronic devices (for example, for remote use of the interface 23 via a smartphone or tablet app), or with induction plates equipped with a corresponding radio communication system. In accordance with the invention the auxiliary device 11 comprise a device for adjusting the electromagnetic coupling 26 positioned at least at the base 6 of the outer containment body 2. In particular, the device for adjusting the electromagnetic coupling 26 is positioned between the active portion 5 of the container 4 and a lower outer surface 7 of the outer containment body 2, so that it can adjust the electromagnetic interaction between an induction plate on which the pot 1 is in use resting and the active portion 5.

In more detail, the device for adjusting the electromagnetic coupling 26 is advantageously switchable between a maximum coupling configuration and a minimum coupling configuration. Whilst in the maximum coupling configuration the electromagnetic coupling between the induction plate and the active portion 5 is the maximum possible (not in absolute terms but for that specific structure), in the minimum coupling configuration the device for adjusting the electromagnetic coupling 26 constitutes a screen designed to prevent or limit the propagation from the lower outer surface 7 towards the active portion 5, of the electromagnetic field, generated by an induction plate on which the pot 1 is in use resting.

In a first preferred embodiment not illustrated, the device for adjusting the electromagnetic coupling 26 comprises at least one movable element, electrically conductive but non-magnetic or diamagnetic, facing or positionable facing the active portion 5. In the minimum coupling configuration the entire active portion 5 completely faces solid portions 28 of that movable element. The term solid portions means portions that do not have through holes aligned along lines perpendicular to the lower outer surface 7 of the outer containment body 2, whilst each point of the active portion 5 is facing a solid portion of the movable element if it is along said perpendicular line. In contrast, in the maximum coupling configuration, at least part of the active portion 5 is not facing solid portions of that movable element.

In a second preferred embodiment, the device for adjusting the electromagnetic coupling 26 comprises at least two movable elements 27 (at least one movable relative to the other). Those movable elements 27 are electrically conductive but non-magnetic or diamagnetic (for example, made of aluminium). Moreover, they are facing or positionable facing one another and are made with solid portions 28. In the minimum coupling configuration the entire active portion 5 is completely facing at least one solid portion of one of the movable elements 27, whilst in the maximum coupling configuration at least part of the active portion 5 is not facing solid portions 28 of the movable elements 27 (that is to say, between the lower outer surface 7 of the outer containment body 2 and at least some zones of the active portion 5 there are no solid portions 28 of the movable elements 27 present). In particular, in the preferred embodiment, the device for adjusting the electromagnetic coupling 26 comprises at least two movable elements 27 each with alternating through openings 29 and solid portions 28. In the maximum coupling configuration the through openings 29 of one movable element 27 are facing the through openings 29 of the other movable element 27, whilst in the minimum coupling configuration the through openings 29 of one movable element 27 are facing the solid portions 28 of the other movable element 27.

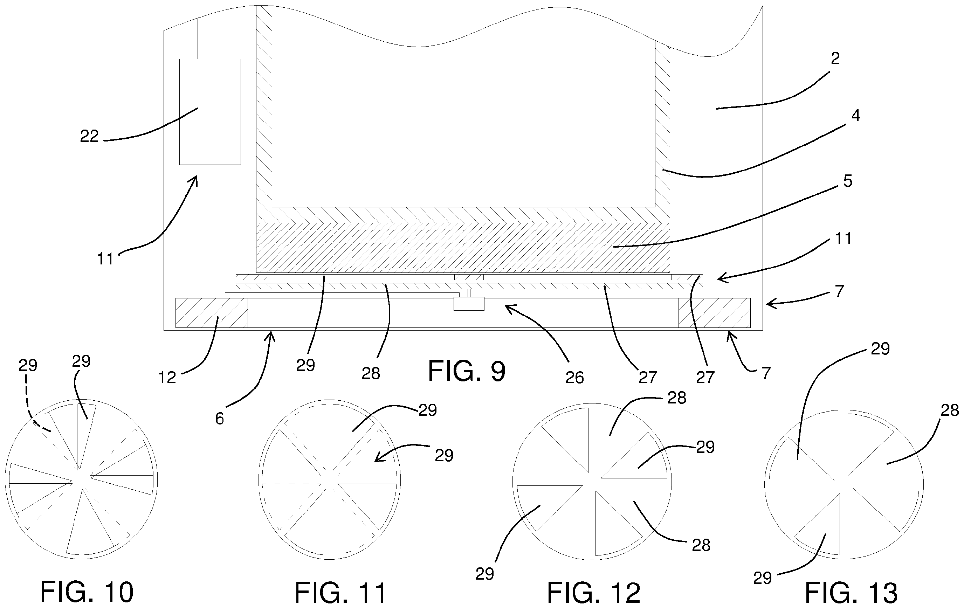

An example of this embodiment is illustrated in Figures 9 to 13.

As can be seen, in this case the two movable elements 27 are constituted of two substantially identical disks that can rotate relative to each other about the central axis, thereby varying the extent to which the respective through openings 29 are facing one another. Figure 10, which corresponds to Figure 9 (the cross-section plane of Figure 9 should be considered positioned horizontal in Figure 10), shows the through openings 29 partly facing one another, whilst Figure 11 shows the screening configuration. Figures 12 and 13 each show only one of the movable elements 27 of Figure 11.

It should be noticed that whilst in Figure 11 each movable element comprises four through openings 29 spaced at 90° from each other and extending for an angle of just under 45° about the central axis, in other embodiments the number of openings may be different. For example, there may be a single opening in each movable element extending for an angle of just under 180°, or n openings offset by an angle equal to 360°/n and each extending for an angle of just under 360°/2n.

The embodiment with a large number of openings in general allows the electromagnetic field concatenated by the power supply inductor 12 to be made more uniform.

Operation of the pot 1 disclosed derives immediately from what is described above, although it may vary depending on the embodiments.

However, in general, once the pot 1 is positioned on an induction plate (where the plate may or may not be embedded in an induction hob) simply activating the plate results in power being supplied to the auxiliary device 11 which is therefore able to operate.

If the device for adjusting the electromagnetic coupling 26 is present, it can be used for adjusting the intensity of the electromagnetic field affecting the active portion 5 and, therefore, the thermal power generated in the container 4.

In all other cases, from the moment when the induction plate is activated, the active portion 5 of the container 4 is also heated.

Moreover, during the entire period of operation, the auxiliary device 11 may be used for the functions for which it is intended.

This invention brings important advantages.

In fact, thanks to this invention, first it has been possible to provide a pot 1 usable on induction plates that is able to combine the usual induction heating with additional functions, without the need for additional electric power supply sources.

Second, thanks to the preferred embodiments of this invention, it has been possible to provide a pot 1 usable on induction plates that is able to maintain an external temperature that is not dangerous for the user substantially for the entire cooking time (obviously provided that the thermally insulating material of the outer containment body 2 is suitably sized and the cooking only lasts for a "normal" period of time).

Finally, it should be noticed that this invention is relatively easy to produce and that even the cost linked to implementing the invention is not very high.

The invention described above may be modified and adapted in several ways without thereby departing from the scope of the claims.

## Claims

1. A pot usable on induction plates comprising:
an outer containment body (2) at least partly made of a material that is thermally insulating and non-magnetic or diamagnetic, the outer containment body (2) forming at least one main housing seat (3);
a container (4) at least partly made of thermally conductive material, mounted in the main housing seat (3); the container (4) comprising at least one active portion (5) made of ferromagnetic material that can be heated by electromagnetic induction;
at least one power supply inductor (12) associated with the outer containment body (2) and which can be powered by electromagnetic induction; and
at least one electrically-powered auxiliary device (11), electrically connected to the power supply inductor (12) so that it can be powered by the latter;
and wherein said auxiliary device (11) comprises a device for adjusting the electromagnetic coupling (26) positioned at least at the base (6) of the outer containment body (2) between the active portion (5) of the container (4) and a lower outer surface (7) of the self-same outer containment body (2); the device for adjusting the electromagnetic coupling (26) being switchable between a maximum coupling configuration and a minimum coupling configuration; in the minimum coupling configuration the device for adjusting the electromagnetic coupling (26) constituting a screen designed to prevent or limit the propagation of an electromagnetic field, generated by an induction plate on which in use the pot (1) is rested, from the lower outer surface (7) towards the active portion (5).

2. The pot according to claim 1, wherein said auxiliary device (11) further comprises either an additional heating device (20) coupled to the container (4) and designed, in use, to heat the contents of the container (4), or a mechanical manipulation device coupled to the container (4) and designed, in use, to apply a mechanical action to the contents of the container (4), or a measuring device coupled to the container (4) and designed, in use, to measure the temperature of the container (4) or of its contents, or the pressure inside the container (4).

3. The pot according to claim 1, wherein the device for adjusting the electromagnetic coupling (26) comprises at least one movable element, electrically conductive, facing or positionable facing the active portion (5), in the minimum coupling configuration the entire active portion (5) completely facing solid portions (28) of that movable element, whilst in the maximum coupling configuration at least part of the active portion (5) not facing solid portions (28) of that movable element.

4. The pot according to claim 1, wherein the device for adjusting the electromagnetic coupling (26) comprises at least two movable elements (27), electrically conductive, facing or positionable facing one another, in the minimum coupling configuration the entire active portion (5) completely facing solid portions (28) of at least one of the movable elements (27), whilst in the maximum coupling configuration at least part of the active portion (5) not facing solid portions (28) of at least one of the movable elements (27).

5. The pot according to claim 1, wherein the device for adjusting the electromagnetic coupling (26) comprises at least two movable elements (27), electrically conductive, facing or positionable facing one another, each movable element comprising alternating through openings (29) and solid portions (28), and wherein in the maximum coupling configuration the through openings (29) of one movable element are facing the through openings (29) of the other movable element, whilst in the minimum coupling configuration the through openings (29) of one movable element are facing the solid portions (28) of the other movable element.

6. The pot according to any one of claims 1 to 5, wherein the auxiliary device (11) also comprises at least one interface (23) positioned at a lateral or upper outer surface (7) of the containment body and/or wherein the auxiliary device (11) also comprises a radio communication board (25),and/or wherein the auxiliary device (11) also comprises a programmed and/or programmable control unit (22).

7. The pot according to any one of claims 1 to 6, wherein the outer containment body (2) is at least mainly made of wood, painted wood, surface-treated wood or wood coated with nanoparticles.

8. The pot according to any one of claims 1 to 7, wherein the container (4) is removably inserted in the main housing seat (3).

9. The pot according to any one of claims 1 to 8, wherein the auxiliary device (11) and the power supply inductor (12) are mounted on or in the outer containment body (2) in a watertight fashion.

10. The pot according to any one of claims 1 to 8, wherein the auxiliary device (11) and/or the power supply inductor (12) are removably mounted on or in the outer containment body (2).

11. The pot according to any one of claims 1 to 10, wherein the outer containment body (2) also comprises at least one lid (8) couplable to the main housing seat (3) for closing the container (4).

12. The pot according to claim 11, wherein the pot (1) is a pressure cooker.

13. The pot according to claim 11 or 12, wherein the auxiliary device (11) is at least partly mounted on the lid (8).

14. The pot according to any one of claims 1 to 13, wherein the outer containment body (2) comprises an outer surface (7) entirely constituted of a material that is thermally insulating.

## Patentansprüche

1. Ein auf Induktionskochfeldern verwendbarer Topf, Folgendes beinhaltend:
einen äußeren Behälterkörper (2), der zumindest teilweise aus einem Material hergestellt ist, das thermisch isolierend und unmagnetisch oder diamagnetisch ist, der äußere Behälterkörper (2) bildet dabei mindestens eine Hauptgehäuseaufnahme (3);
einen Behälter (4), der zumindest teilweise aus einem thermisch leitenden Material hergestellt ist, in die Hauptgehäuseaufnahme (3) montiert; der Behälter (4) beinhaltet dabei mindestens einen aktiven Teil (5), der aus einem ferromagnetischen Material hergestellt ist, das durch elektromagnetische Induktion erhitzt werden kann;
mindestens eine Leistungsversorgungsinduktivität (12), die mit dem äußeren Behälterkörper (2) vereinigt ist und die durch elektromagnetische Induktion mit Energie versorgt werden kann; und
mindestens eine elektrisch angetriebene Hilfsvorrichtung (11), die elektrisch mit der Leistungsversorgungsinduktivität (12) verbunden ist, so dass sie durch letztere mit Energie versorgt werden kann;
und wobei besagte Hilfsvorrichtung (11) eine Vorrichtung zur Regelung der elektromagnetischen Kopplung (26), die zumindest am Boden (6) des äußeren Behälterkörpers (2) zwischen dem aktiven Teil (5) des Behälters (4) und einer unteren Außenfläche (7) dieses selben äußeren Behälterkörpers (2) positioniert ist, beinhaltet; die Vorrichtung zur Regelung der elektromagnetischen Kopplung (26) ist dabei zwischen einer maximalen Kopplungsanordnung und einer minimalen Kopplungsanordnung umschaltbar; in der minimalen Kopplungsanordnung stellt die Vorrichtung zur Regelung der elektromagnetischen Kopplung (26) dabei einen Schirm dar, der konzipiert ist, um die Verbreitung eines elektromagnetischen Felds, das durch ein Induktionskochfeld erzeugt wird, auf dem der Topf (1) im Gebrauch steht, von der unteren Außenfläche (7) in Richtung des aktiven Teils (5) zu verhindern oder einzuschränken.

2. Der Topf nach dem Patentanspruch 1, wobei besagte Hilfsvorrichtung (11) weiter entweder eine zusätzliche Heizvorrichtung (20), mit dem Behälter (4) gekoppelt und im Gebrauch dazu konzipiert, den Inhalt des Behälters (4) zu erhitzen, oder eine mechanische Einwirkungsvorrichtung, die mit dem Behälter (4) gekoppelt ist und konzipiert ist, um im Gebrauch eine mechanische Einwirkung auf den Inhalt des Behälters (4) vorzunehmen, oder eine Messvorrichtung, die mit dem Behälter (4) gekoppelt ist und konzipiert ist, um im Gebrauch die Temperatur des Behälters (4) oder seines Inhalts, oder den Druck innerhalb des Behälters (4) zu messen, ist.

3. Der Topf nach dem Patentanspruch 1, wobei die Vorrichtung zur Regelung der elektromagnetischen Kopplung (26) mindestens ein bewegliches, elektrisch leitendes Element beinhaltet, das dabei zum aktiven Teil (5) gerichtet ist oder zu diesem gerichtet positionierbar ist, in der minimalen Kopplungsanordnung ist der gesamte aktive Teil (5) dabei vollständig zu festen Teilen (28) dieses beweglichen Elements gerichtet, während in der maximalen Kopplungsanordnung mindestens ein Teil des aktiven Teils (5) nicht zu festen Teilen (28) dieses beweglichen Elements gerichtet ist.

4. Der Topf nach dem Patentanspruch 1, wobei die Vorrichtung zur Regelung der elektromagnetischen Kopplung (26) mindestens zwei bewegliche, elektrisch leitende Elemente (27) beinhaltet, die zueinander gerichtet sind oder zueinander gerichtet positionierbar sind, in der minimalen Kopplungsanordnung ist der gesamte aktive Teil (5) dabei vollständig zu festen Teilen (28) mindestens eines dieser beweglichen Elemente (27) gerichtet, während in der maximalen Kopplungsanordnung mindestens ein Teil des aktiven Teils (5) nicht zu festen Teilen (28) mindestens eines der beweglichen Elemente (27) gerichtet ist.

5. Der Topf nach dem Patentanspruch 1, wobei die Vorrichtung zur Regelung der elektromagnetischen Kopplung (26) mindestens zwei bewegliche, elektrisch leitende Elemente (27) beinhaltet, die zueinander gerichtet sind oder zueinander gerichtet positionierbar sind, jedes bewegliche Element beinhaltet dabei abwechselnd durchgehende Öffnungen (29) und feste Teile (28), und wobei in der maximalen Kopplungsanordnung die durchgehenden Öffnungen (29) eines beweglichen Elements zu den durchgehenden Öffnungen (29) des anderen beweglichen Elements gerichtet sind, während in der minimalen Kopplungsanordnung die durchgehenden Öffnungen (29) eines beweglichen Elements zu den festen Teilen (28) des anderen beweglichen Elements gerichtet sind.

6. Der Topf nach jedem der Patentansprüche 1 bis 5, wobei die Hilfsvorrichtung (11) auch mindestens eine Schnittstelle (23) beinhaltet, die an einer seitlichen oder oberen Außenfläche (7) des Behälterkörpers positioniert ist und/oder wobei die Hilfsvorrichtung (11) auch eine Funkkommunikationsplatine (25) beinhaltet und/oder wobei die Hilfsvorrichtung (11) auch eine programmierte und/oder programmierbare Steuerungseinheit (22) beinhaltet.

7. Der Topf nach jedem der Patentansprüche 1 bis 6, wobei der äußere Behälterkörper (2) zumindest teilweise aus Holz, lackiertem Holz, oberflächenbearbeitetem Holz oder mit Nanopartikeln beschichtetem Holz besteht.

8. Der Topf nach jedem der Patentansprüche 1 bis 7, wobei der Behälter (4) entnehmbar in die Hauptgehäuseaufnahme (3) eingesetzt ist.

9. Der Topf nach jedem der Patentansprüche 1 bis 8, wobei die Hilfsvorrichtung (11) und die Leistungsversorgungsinduktivität (12) auf wasserdichte Weise an oder im äußeren Behälterkörper (2) montiert sind.

10. Der Topf nach jedem der Patentansprüche 1 bis 8, wobei die Hilfsvorrichtung (11) und/oder die Leistungsversorgungsinduktivität (12) abnehmbar an oder im äußeren Behälterkörper (2) montiert sind.

11. Der Topf nach jedem der Patentansprüche 1 bis 10, wobei der äußere Behälterkörper (2) auch mindestens einen Deckel (8) beinhaltet, der mit der Hauptgehäuseaufnahme (3) gekoppelt werden kann, um den Behälter (4) zu schließen.

12. Der Topf nach dem Patentanspruch 11, wobei der Topf (1) ein Schnellkochtopf ist.

13. Der Topf nach dem Patentanspruch 11 oder 12, wobei die Hilfsvorrichtung (11) zumindest teilweise am Deckel (8) montiert ist.

14. Der Topf nach jedem der Patentansprüche 1 bis 13, wobei der äußere Behälterkörper (2) eine Außenfläche (7) beinhaltet, die vollständig aus einem Material besteht, das thermisch isolierend ist.

## Revendications

1. Une marmite utilisable sur des plaques à induction comprenant :
un corps extérieur de confinement (2) au moins partiellement réalisé dans un matériau qui est thermiquement isolant et non magnétique ou diamagnétique, le corps extérieur de confinement (2) formant au moins un siège principal de logement (3) ;
un contenant (4) au moins partiellement réalisé dans un matériau thermiquement conducteur, monté dans le siège principal de logement (3) ; le contenant (4) comprenant au moins une portion active (5) réalisée dans un matériau ferromagnétique qui peut être chauffé par induction électromagnétique ;
au moins un inducteur d'alimentation (12) associé au corps extérieur de confinement (2) et qui peut être alimenté par induction électromagnétique ; et
au moins un dispositif auxiliaire (11) à alimentation électrique, relié électriquement à l'inducteur d'alimentation (12) de manière à pouvoir être alimenté par ce dernier ;
et dans laquelle ledit dispositif auxiliaire (11) comprend un dispositif de réglage du couplage électromagnétique (26) positionné au moins au niveau de la base (6) du corps extérieur de confinement (2) entre la portion active (5) du contenant (4) et une surface extérieure (7) inférieure de ce même corps extérieur de confinement (2) ; le dispositif de réglage du couplage électromagnétique (26) pouvant être commuté entre une configuration de couplage maximum et une configuration de couplage minimum ; dans la configuration de couplage minimum le dispositif de réglage du couplage électromagnétique (26) constituant un écran destiné à empêcher ou limiter la propagation d'un champ électromagnétique, généré par une plaque à induction sur laquelle la marmite (1) est posée lors de l'utilisation, de la surface extérieure (7) inférieure vers la portion active (5).

2. La marmite selon la revendication 1, dans laquelle ledit dispositif auxiliaire (11) comprend en outre un dispositif de chauffage supplémentaire (20) accouplé avec le contenant (4) et destiné, lors de l'utilisation, à chauffer le contenu du contenant (4), ou un dispositif de manipulation mécanique accouplé avec le contenant (4) et destiné, lors de l'utilisation, à appliquer une action mécanique au contenu du contenant (4), ou un dispositif de mesure accouplé au contenant (4) et destiné, lors de l'utilisation, à mesurer la température du contenant (4) ou de son contenu, ou la pression à l'intérieur du contenant (4).

3. La marmite selon la revendication 1, dans laquelle le dispositif de réglage du couplage électromagnétique (26) comprend au moins un élément mobile, électriquement conducteur, faisant face à ou pouvant être positionné face à la portion active (5), dans la configuration de couplage minimum toute la portion active (5) faisant entièrement face à des portions pleines (28) de cet élément mobile, tandis que dans la configuration de couplage maximum au moins une partie de la portion active (5) ne faisant pas face à des portions pleines (28) de cet élément mobile.

4. La marmite selon la revendication 1, dans laquelle le dispositif de réglage du couplage électromagnétique (26) comprend au moins deux éléments mobiles (27), électriquement conducteurs, se faisant face l'un l'autre ou pouvant être positionnés l'un en face de l'autre, dans la configuration de couplage minimum toute la portion active (5) faisant entièrement face à des portions pleines (28) d'au moins un des éléments mobiles (27), tandis que dans la configuration de couplage maximum au moins une partie de la portion active (5) ne faisant pas face à des portions pleines (28) d'au moins un des éléments mobiles (27).

5. La marmite selon la revendication 1, dans laquelle le dispositif de réglage du couplage électromagnétique (26) comprend au moins deux éléments mobiles (27), électriquement conducteurs, se faisant face l'un l'autre ou pouvant être positionnés l'un en face de l'autre, chaque élément mobile comprenant une alternance d'ouvertures traversantes (29) et de portions pleines (28), et dans laquelle dans la configuration de couplage maximum les ouvertures traversantes (29) d'un élément mobile sont en face des ouvertures traversantes (29) de l'autre élément mobile, tandis que dans la configuration de couplage minimum les ouvertures traversantes (29) d'un élément mobile sont en face des portions pleines (28) de l'autre élément mobile.

6. La marmite selon l'une quelconque des revendications de 1 à 5, dans laquelle le dispositif auxiliaire (11) comprend également au moins une interface (23) positionnée au niveau d'une surface extérieure (7) latérale ou supérieure du corps de confinement et/ou dans laquelle le dispositif auxiliaire (11) comprend également une carte de communication radio (25), et/ou dans laquelle le dispositif auxiliaire (11) comprend également une unité de contrôle (22) programmée et/ou programmable.

7. La marmite selon l'une quelconque des revendications de 1 à 6, dans laquelle le corps extérieur de confinement (2) est au moins principalement réalisé en bois, bois peint, bois traité en surface ou bois revêtu de nanoparticules.

8. La marmite selon l'une quelconque des revendications de 1 à 7, dans laquelle le contenant (4) est inséré de façon amovible dans le siège principal de logement (3).

9. La marmite selon l'une quelconque des revendications de 1 à 8, dans laquelle le dispositif auxiliaire (11) et l'inducteur d'alimentation (12) sont montés sur ou dans le corps extérieur de confinement (2) d'une façon étanche à l'eau.

10. La marmite selon l'une quelconque des revendications de 1 à 8, dans laquelle le dispositif auxiliaire (11) et/ou l'inducteur d'alimentation (12) sont montés de façon amovible sur ou dans le corps extérieur de confinement (2).

11. La marmite selon l'une quelconque des revendications de 1 à 10, dans laquelle le corps extérieur de confinement (2) comprend également au moins un couvercle (8) pouvant être accouplé avec le siège principal de logement (3) pour fermer le contenant (4).

12. La marmite selon la revendication 11, dans laquelle la marmite (1) est une marmite à pression.

13. La marmite selon la revendication 11 ou 12, dans laquelle le dispositif auxiliaire (11) est au moins partiellement monté sur le couvercle (8).

14. La marmite selon l'une quelconque des revendications de 1 à 13, dans laquelle le corps extérieur de confinement (2) comprend une surface extérieure (7) entièrement constituée d'un matériau qui est thermiquement isolant.
